Europäisches Patentamt

European Patent Office

Office européen des brevets

(19)

(11) Publication number: **0 445 719 A2**

# EUROPEAN PATENT APPLICATION

(12)

(21) Application number: **91103292.8**

(22) Date of filing: **05.03.91**

(51) Int. Cl.⁵: **G01C 21/20**

(30) Priority: **06.03.90 JP 52830/90**
**20.03.90 JP 68301/90**

(43) Date of publication of application:
**11.09.91 Bulletin 91/37**

(84) Designated Contracting States:
**DE FR GB**

(71) Applicant: **PIONEER ELECTRONIC
CORPORATION**
**No. 4-1, Meguro 1-chome**
**Meguro-ku Tokyo 153(JP)**

(72) Inventor: **Yoshihara, Tohru, c/o Pioneer
Electronic Corp.**
**Kawagoe Kojo, 25-1, Aza Nishimachi, Oaza
Yamada**
**Kawagoe-shi, Saitama, 350(JP)**
Inventor: **Tsujimura, Shigeru, c/o Pioneer
Electronic Corp.**
**Kawagoe Kojo, 25-1, Aza Nishimachi, Oaza**

Yamada
**Kawagoe-shi, Saitama, 350(JP)**
Inventor: **Takemura, Shiniche, c/o Pioneer
Electronic Corp.**
**Kawagoe Kojo, 25-1, Aza Nishimachi, Oaza
Yamada**
**Kawagoe-shi, Saitama, 350(JP)**
Inventor: **Shimakata, Masashi, c/o Pioneer
Electronic Corp.**
**Kawagoe Kojo, 25-1, Aza Nishimachi, Oaza
Yamada**
**Kawagoe-shi, Saitama, 350(JP)**
Inventor: **Endo, Isao, c/o Pioneer Electronic
Corp.**
**Kawagoe Kojo, 25-1, Aza Nishimachi, Oaza
Yamada**
**Kawagoe-shi, Saitama, 350(JP)**

(74) Representative: **Reinhard, Skuhra, Weise**
**Friedrichstrasse 31**
**W-8000 München 40(DE)**

(54) **Navigation apparatus for vehicles.**

(57) A navigation apparatus for a vehicle in which a self-supporting sensing system on the basis of a gyro, a geomagnetic sensor, a vehicle speed pulse generatore and the like, and a two-dimensional sensing system or a three-dimensional sensing system on the basis of a GPS (Global Positioning System) are suitably switched to effect sensing, and inforamtion such as a present position, a running locus and the like on the basis of the sensed results are displayed in a predetermined form of display on a display section, characterized in that the form of display is differentiated in response to the sensed states at the running points whether the sensed states are the self-supporting sensed state on the basis of said self-supporting sensing system, the two-dimensional sensed state on the basis of said two-dimensional sensing system or the three-dimensional sensed state on the basis of said three-dimensional sensing system.

FIG. 1

Rank Xerox (UK) Business Services

## BACKGROUND OF THE INVENTION

### Fielf of the Invention

This invention relates to a navigation apparatus for a vehicle which displays information on the basis of the sensed result on a display section. The foot brake is placed in operating state to thereby display information on the display image plane of the display section.

### Description of the Prior Art

In the past, the navigation apparatus for a vehicle of this kind comprises a self-supporting sensing system including a gyro, a geomagnetic sensor and a vehicle speed pulse generator, and a two-dimensional sensing system or a three-dimensional sensing system including a GPS (Global Positioning System) receiver. The self-supporting sensing system and the two-dimensional or three-dimensional sensing system are suitably switched to sense a position so that information such as a present position, a running locus and the like on the basis of the sensed results are displayed on a map displayed on the image plane of the display section in the form of using figures such as circle marks and arrow marks or using dotted lines and solid lines.

It has been generally known that the sensed result obtained by the self-supporting sensing system is different in the sensing accuracy from that obtained by the two-dimensional or three-dimensional sensing system on the basis of the GPS receiver. Particularly, the sensed result from the self-supporting system is greatly different from that from the three-dimensional sensing system.

In the conventional navigation apparatus for a vehicle, information on the basis of the sensed results such as the present position, running locus and the like are displayed in the same form of display irrespective of the self-supporting sensed state by the self-supporting sensing system, the two-dimensional sensed state by the two-dimensional sensing system on the basis of the GPS receiver or the three-dimensinal sensed state by the three-dimensional sensing system. Therefore, for example, even the same arrow mark, a user (driver) does not know from which sensed state the arrow mark results.

Accordingly, the information on the basis of the sensed results such as the present position, running locus and the like greatly varies according to the sensing state, as previously mentioned, and therefore, if the user gulps down the information (display) on the display section, the user sometimes fails to recognize the present position or misconceive a trouble of the navigation apparatus for a vehicle due to an error between the actual running point and the runing point on the display section, resulting in an inconvenience that an adequate (proper) running guide cannot always be given the user.

For overcoming the aforementioned inconvience, this invention provides a navigation apparatus for a vehicle which can precisely inform the user of reliablity of the display in connection with the information on the basis of the sensed results.

Again, in the conventional navigation apparatus for a vehicle, a display section such as CRT is provided at a position that can be viewed by the driver (user) so that information and a map are displayed on the image plane of the display section.

When the driver looks at the information displayed on the image plane of the display section during running, the cause of ahead-carelessness tends to occur, which is never preferred. For the purpose of safety driving, it is designed so that the information is not displayed on the image plane of the display section unless the side brake is operated.

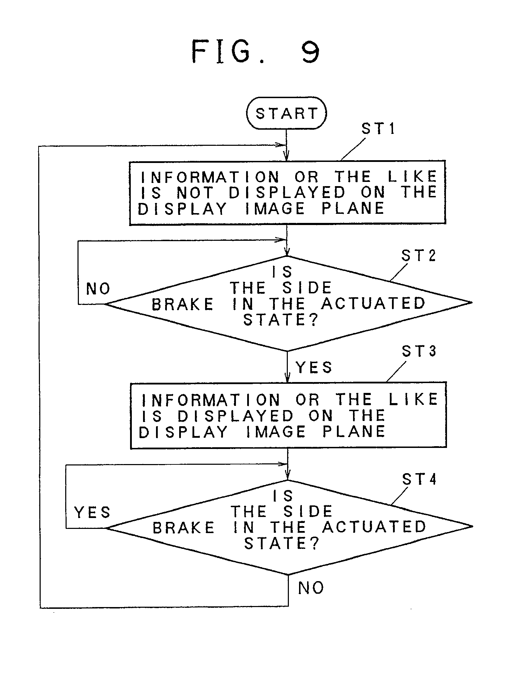

FIG. 9 is a flow chart for explaining the operation of the conventional navigation apparatus for a vehicle. ST1 to ST4 show the respective steps.

The operation of the conventional apparatus will be described hereinafter.

First, the operation for displaying the information on the image plane of the display section is started, the information is not displayed on the image plane (ST1) but determination is made if the side brake is in the operating state (ON state) (ST2). If the side brake is ON, the information is displayed on the image plane (ST3).

Then, determination is made if the side brake is ON. If the side brake is in the inoperable state (OFF), the step advances to ST1.

If the side brake is in the inoperable state according to the determination of ST2, the driver waits till the side brake assumes the operating state. If the side brake is in the operating state according to the determination of ST4, the driver waits till the side brake assumes the unoperable state.

Accordingly, the driver causes the side brake placed in the operating state to thereby confirm the information displayed on the image plane.

However, in the above-described conventional navigation apparatus for a vehicle, the information is not displayed on the image plane of the display section unless the side brake is in the operating state. Therefore, the side brake has to be placed in the operating state every time the driver looks at (confirm) the information displayed on the image plane, resulting in an inconvenience that it is cumbersome to actuate the side brake.

For overcoming the aforementioned inconvenience, this invention provides a navigation apparatus for a vehicle which can respond to the demand of safety driving and which can easily look at the information.

## SUMMARY OF THE INVENTION

According to a first aspect of the present invention, there is provided a navigation apparatus for a vehicle in which information on the basis of the sensed results is displayed on a display section with the form of display differentiated according to the self-supporting sensed state by a self-supporting sensing system on the basis of a gyro, a geomagnetic sensor, a vehicle speed pulse generator and the like at running points, the two-dimensional sensed state by a two-dimension sensing system on the basis of a GPS receiver or the three-dimensional sensed state by a three-dimensional sensing system.

In the navigation apparatus for a vehicle according to this invention, information on the basis of the sensed results, for example, such as a present position, a running locus and the like are displayed on the display section with the form of display differentiated according to the sensed states. It is therefore possible to precisely inform a user of reliability of display in connection with information on the basis of the sensed results such as a present position, a running locus and the like.

According to a second aspect of the present invention, there is provided a navigation apparatus for a vehicle comprising a display section for displaying on a display image plane information received from an operating section and information on the basis of the sensed result of a sensing section as well as a map; a foot brake actuation-state detecting section which detects an actuation state of a foot brake to thereby output an actuating output and detects a non-actuation state of the foot brake to thereby output a non-actuation signal; a timer section for counting time; and a control section in which the information is displayed on a display image plane by being supplied with the actuation signal, and when a predetermined time passes on the basis of the output from the timer section after being supplied with the actuation signal, displaying of the information on the image plane is terminated.

In the navigation apparatus for a vehicle according to this invention, the display of the information on the image plane is started by placing the foot brake in the actuation state, and the display of the information on the image plane is terminated in a predetermined time after the foot brake has been placed in the non-operable state.

Accordingly, the information can be displayed on the image plane by actuating the foot brake, and the information is displayed on the image plane only for a predetermined time (minimum time) required for confirmation of the information.

## BRIEF DESCRIPTION OF THE DRAWINGS

FIG. 1 is a block diagram of a navigation apparatus for a vehicle according to a first embodiment of this invention;

FIG. 2 is a flow chart for explaining the operation;

FIGS. 3 and 4 illustrate examples of the form of display;

FIG. 5 is a block diagram showing the arrangement of a navigation apparatus for a vehicle according to a second embodiment of the present invention;

FIG. 6 is a flow chart for explaining the operation of the apparatus shown in FIG. 5;

FIGS. 7(a) and 7(b) and FIGS. 8(a) and 8(b) illustrate examples of displaying information on the image plane; and

FIG. 9 is a flow chart for explaining the operation of a conventional navigation apparatus for a vehilce.

## DETAILED DESCRIPTION OF THE PREFERRED EMBODIMENTS

Embodiments of the present invention will be described hereinafter with reference to the accompanying drawings.

### First Embodiment

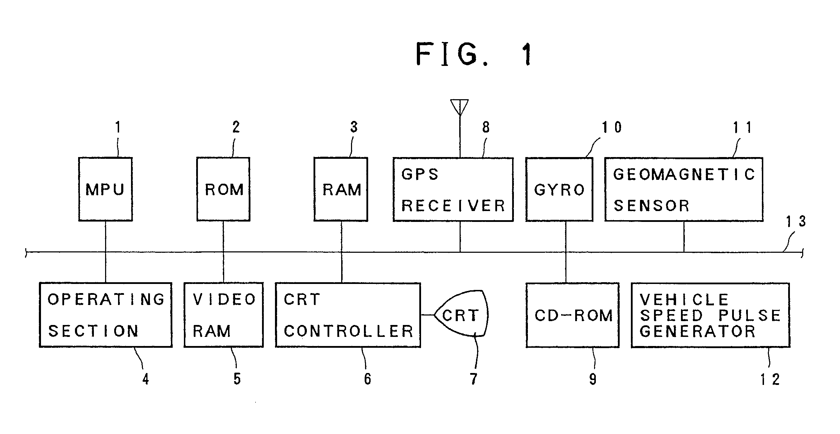

FIG. 1 is a block diagram showing the arrangement of a navigation apparatus for a vehicle according to a first embodiment of this invention. In FIG. 1, reference numeral 1 designates MPU, in which a system program stored in ROM 2 is executed to thereby realize various necessary functions with RAM 3 used as a work area.

The navigation apparatus for a vehicle is controlled by a microcomputer composed of MPU 1, ROM 2 and RAM 3.

Reference numeral 4 designates an operating section provided with ten keys, function keys, touch panels and the like for providing necessary inputs, and reference numeral 5 designates a video RAM for storing image data for one image plane displayed on the display image plane of CRT 7 so that the image data stored in the video RAM 5 is delivered to a CRT controller 6 by the action of MPU 1 to display a map on the image plane of CRT 7 connected to the CRT controller 6.

Reference numeral 8 designates a GPS (Global Positioning System), which as is known, receives radio waves from a plurality of artificial satellites so that a present position is obtained by a two-dimensional sensing system or a three-dimensional sensing system. The present position is displayed, for example, in the form of arrow mark, on a map on the image plane of CRT 7 on the basis of the obtained present position data, and a running locus is displayed on the map of the image plane of CRT 7 on the basis of data which stores and retains the present position data in time series manner.

Reference numeral 9 designates CD-ROM which stores map data displayed on the image plane of CRT 7, in which the map data suitably edited by the action of MPU 1 is delivered to the video RAM 5.

Reference numeral 10 designates a gyro; 11 a geomagnetic sensor; and 12 a vehicle speed pulse generator. The gyro 10, the geomagnetic sensor 11 and the vehicle speed pulse generator 12 constitute a self-supporting sensing system for obtaining a present position by so-called integrating process. The self-supporting sensing system generally functions as a backup in the case where the GPS receiver 8 cannot catch three or more artificial satellites and lowers its sensing accuracy as the distance from a reference position is far, in terms of nature thereof.

Reference numeral 13 designates a system bus, to which are connected the MPU 1 to CRT controller 6, and the GPS receiver 8 to vehicle speed pulse generator 12.

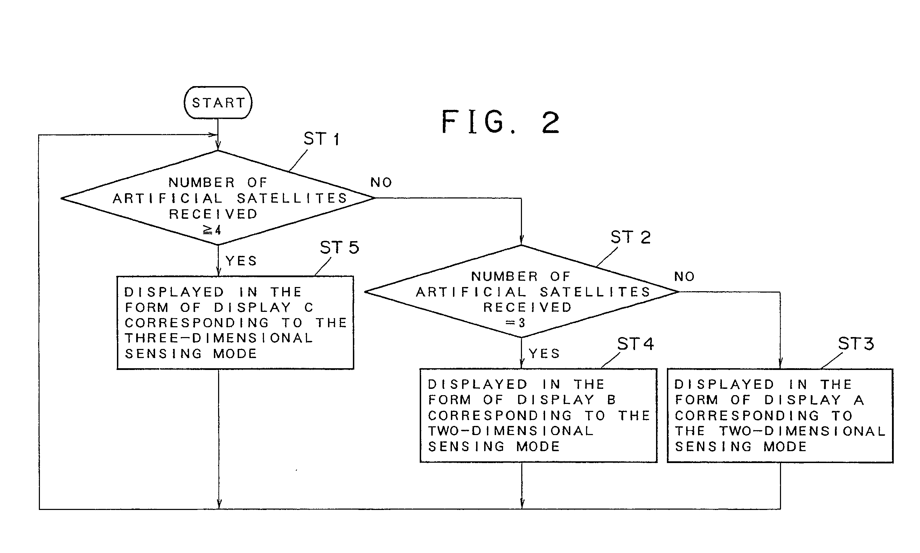

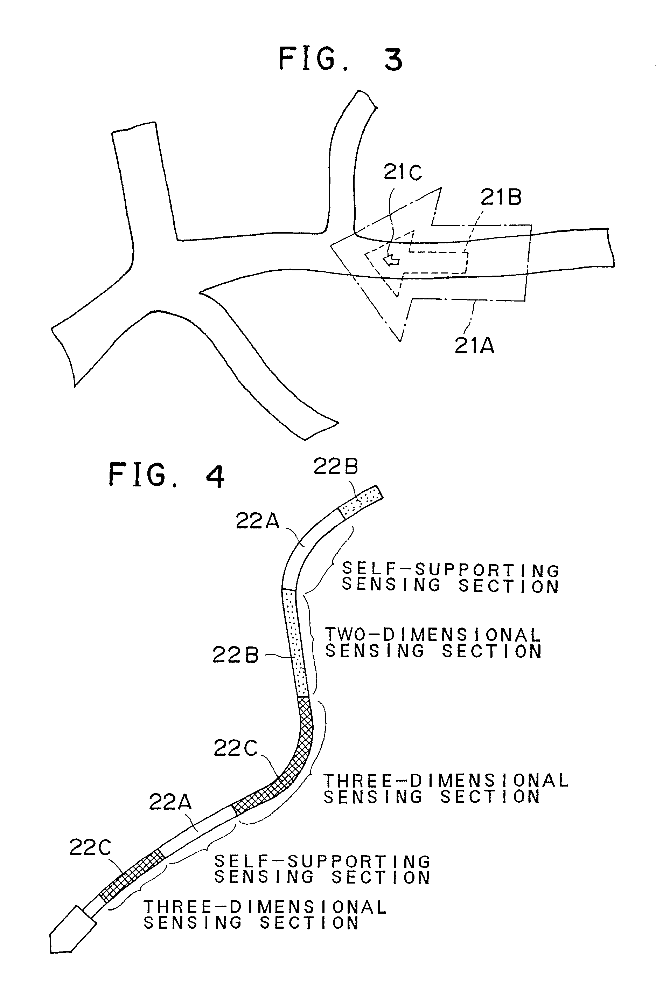

FIG. 2 is a flow chart for explaining the operation, in which ST1 to ST5 represent the respective steps.

First, in the state where the map is displayed on the image plane of the CRT 7, processing for displaying the present position and the running locus on the map is started. Determination is made if the artificial satellites capable of receiving radio waves are four or more (Step ST1). If the artificial satellites are less than three, determination is made if the artificial satellites capable of receiving radio waves are three (Step ST2).

If the artificial satellites are less than three in the determination of Step ST2, the present sensed state (sensed mode) is the self-supporting sensing system, and therefore, the present position and the running locus are displayed in the display form A corresponding to the self-supporting sensed state (Step ST3).

If the artificial satellites are three in the determination of Step ST2, the present sensed state is the two-dimensional sensing system, and therefore, the present position and the running locus are displayed in the display form B corresponding to the two-dimensional sensed state (Step ST4).

If the artificial satellites are four or more, the present sensed state is the three-dimensional sensing system, and therefore, the present position and the running locus are displayed in the display form C corresponding to the three-dimensional sensed state (Step ST15).

After the Steps ST3 to ST5, the step advances to Step ST1.

One example of the aforementioned display forms A to C wil be described hereinafter.

FIG. 3 illustrates one display example of the present position. Reference numeral 21A designates the arrow indicated by the phantom line corresponding to the display form A; 21B the arrow indicated by the dotted line corresponding to the display form B; and 21C the arrow indicated by the solid line corresponding to the display form C. The lines or sizes of the arrows 21A to 21C are made in correspondence with the sensing accuracy.

FIG. 4 illustrates one display example of the running locus. Reference numeral 22A designates a red portion showing the running section corresponding to the display form A; 21B a yellow portion showing the running section corresponding to the display form B; and 21C a blue portion showing the running section corresponding to the display form C. Colors of the portions 22A to 22C are made in correspondence to the sensing accuracy.

When the present position and the running locus are displayed at the arrows 21A to 21C and portions 22a to 22C corresponding to the display forms A to C shown in FIGS. 3 and 4, it is possible to preceisely inform a user of the sensing accuracy and the running locus with the lines and sizes of the arrows 21A to 21C and colors of the portions 22A to 22C.

Accordingly, according to the above-described embodiment, it is possible to precisely grasp whether the sensed states at the running points are the self-sensed state, the two-dimensional sensed state or the three-dimensional sensed state according to the variation of the display forms A to C.

When a position is greatly deviated from the road on the actual map, it is possible to precisely judge its cause whether selection of route is erroneous or the sensing accuracy is erroneous.

While in the above-described embodiment, as an example in which the display forms of information on the basis of the sensed results are differentiated, an example has been described in which the present position is indicated at the arrows with the lines and sizes differentiated or the colors of sections of the running locus are differentiated, it is needless to say that the sizes of arrows and the like representative of the present position are indicated by the same display but differentiated in color, or the color of the background of the image plane may be differentiated, or the shape of the displayed figure may be differentiated.

Furthermore, while in the above-described embodiment, as information on the basis of the sensed results, an example of the present position and the running locus has been described, it is needless to say that in case of only the present position, the information can be applied to the display of course or route in case of showing a running direction.

## Second Embodiment

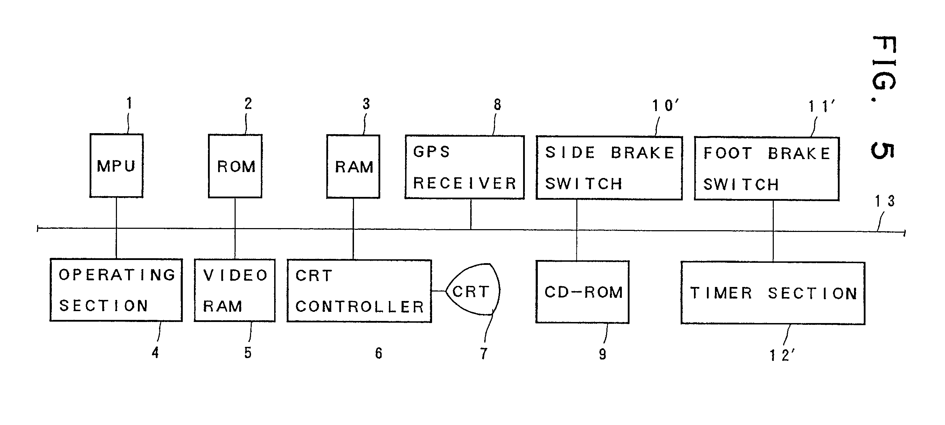

FIG. 5 is a block diagram showing the arrangement of a navigation apparatus for a vehicle according to a second embodiment of this invention. In FIG. 1, reference numeral 1 designates MPU, in which a system program stored in ROM 2 is executed to thereby realize various necessary functions with RAM 3 used as a work area.

The navigation apparatus for a vehicle is controlled by a microcomputer composed of MPU 1, ROM 2 and RAM 3.

Reference numeral 4 designates an operating section provided with ten keys, function keys, touch panels and the like for providing necessary inputs, and reference numeral 5 designates a video RAM for storing image data for one image plane displayed on the display image plane of CRT 7 so that the image data stored in the video RAM 5 is delivered to a CRT controller 6 by the action of MPU 1 to display a map on the image plane of CRT 7 connected to the CRT controller 6.

Reference numeral 8 designates a GPS (Global Positioning System), which as is known, receives radio waves from a plurality of artificial satellites to effect sensing. It is necessary to receive radio waves from at least more than three artificial satellites in order to sense a present position.

It is to be noted that data of the present position sensed by the GPS receiver 8 is stored and retained in time series manner, and the running locus is displayed on the map displayed on the image plane of the CRT 7 on the basis of thus stored and retained data.

Reference numeral 9 designates CD-ROM which stores map data displayed on the image plane of CRT 7, in which the map data suitably edited by the action of MPU 1 is delivered to the video RAM 5.

Reference numeral 10' designates a side brake switch which detects that the side brake has been placed in the actuated state (ON state) to output a side brake actuated signal and which detects that the side brake has been placed in the non-actuated state (OFF state) to output a side brake non-actuated signal.

Reference numeral 11' designates a foot brake swtich which detects that the foot brake has been placed in the actuated state to output a foot brake actuated signal, and which detects that the foot brake has been placed in the non-actuated state to output a foot brake non-actuated signal.

Reference numeral 12' designates a timer section for counting time, and 13 designates a system bus, to which are connected the MPU 1 to CRT controller 6, the GPS receiver 8, and the CD-ROM 9 to timer section 12'.

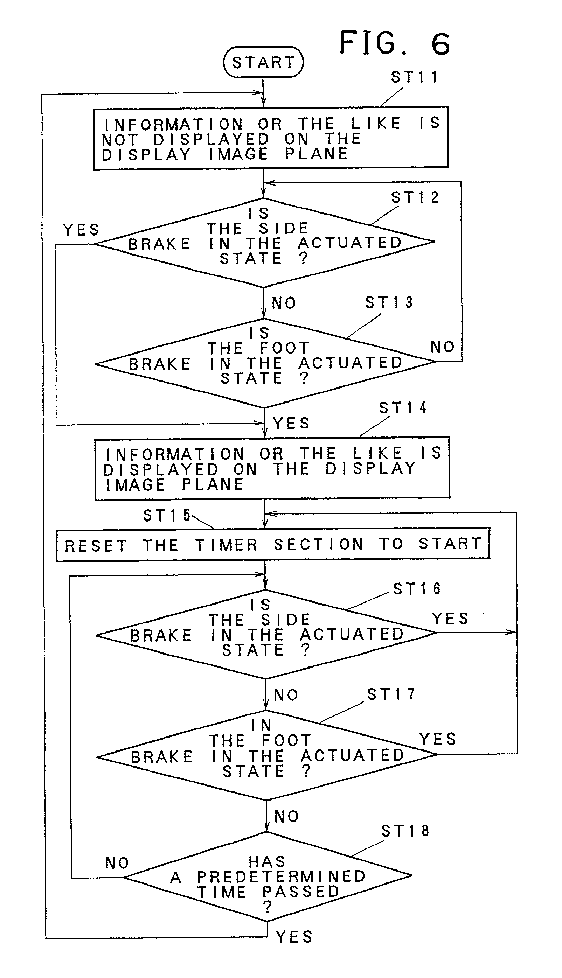

FIG. 6 is a flow chart for explaining the operation in which ST11 to ST18 represent the respective steps.

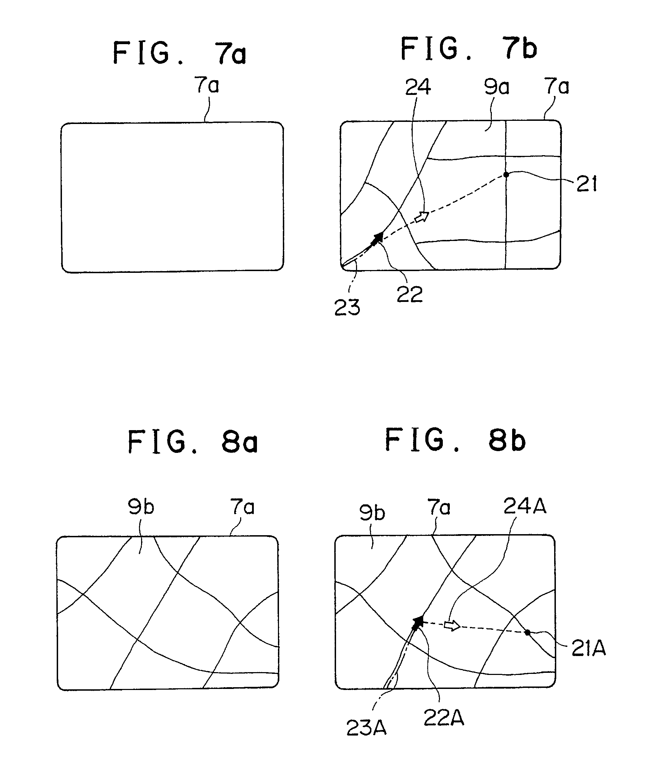

FIGS. 7(a) and 3(b) are respectively explanatory views each showing one example for displaying information and a map on the image plane of the CRT 7. Reference numeral 7a designates a display image plane of CRT 7; 9a a map displayed on the image plane 7a; 21 an objective position at which keys on the operating section 4 are operated and input; 22 an arrow-present position marker in combination of the present position and the running direction on the basis of the sensed result of the GPS receiver 8; 23 a running focus on the basis of the sensed present position; and 24 an arrow-objective direction marker which is the objective position direction viewing the objective position 21 from the present position.

Next, the operation will be described.

First, the operation of displaying information or the like on the image plane 7a of CRT 7 is started. Then, as shown in FIG. 7(a), information or the like are not displayed on the image plane 7a (ST 11) but determination is made on the basis of the side brake switch 10' if the side brake is in the actuated state (ST 12). If the side brake is in the non-actuated state, determination is made on the basis of the output of the foot brake switch 11' if the foot brake is in the actuated state (ST 13).

If the foot brake is in the non-actuated state in the determination of Step ST13, the step advances to Step ST12. If the foot brake is in the actuated state in the determination of Step ST13 or if the side brake is in the actuated state in the determination of Step ST12, the information or the like are displayed on the image plane 7a of CRT 7 (ST 14).

Next, the timer section 12 is reset (ST 15), after which determination is made on the basis of the output of the side brake switch 10' if the side brake is in the actuated state (ST 16). If the side brake is in the non-actuated state, determination is made on the basis of the output of the foot brake switch 11 if the foot brake is in the atuated state (ST 17).

If the foot brake is in the actuated state in the determination of Step ST 17 or if the side brake is in the actuated state in the determination of Step ST 16, the step advances to Step ST15. If the foot brake is in the non-actuated state in the determination of Step ST 17, determination is made on the basis of the output of the timer section 12 if a predetermined time (for example, 10 seconds) has passed (ST 18).

Subsequently, if the predetermined has not passed in the determination of Step ST 18, the step advances to Step ST 16. If the predetermined time has passed, the step advances to Step ST 11.

FIGS. 8(a) and 8(b) are explanatory views showing another example displaying information on the image plane 7a, in which parts corresponding to those shown in FIGS. 7(a) and 7(b) are indicated by the same reference numerals.

In FIG. 8, reference numeral 9a designates a map displayed on the image plane 7a; 21A' an objective position input by operating keys on the operating section 4; 22A' an arrow-like present position marker in combination of the present position and running direction on the basis of the sensed results of the GPS receiver 8; 23A a running locus on the basis of the sensed present position; and 24A an arrow-like objective direction marker which is an objective positional direction with the objective position 21A' viewed from the present position.

In the case where the information are displayed as shown in FIGS. 8(a) and 8(b), even if the information is displayed on the image plane 7a by scrolling the map 9a alone as shown in FIG. 8(a), the driver needs not to often turn the CRT 7 ON and OFF without paying much attention to the map 9a because the speed of scrolling the map 9a is slow.

Accordingly, according to the above-described embodiment, not only when the side brake is placed in the actuated state but also whern the foot brake is placed in the actuated state, the information or the like can be displayed on the image plane 7a, thus improving the operation.

Furthermore, even in the case where the side brake or the foot brake is placed in the actuated state for a short period of time, a predetermined time after the side brake or the foot brake has been placed in the non-actuated state is such that since the information or the like is displayed on the image plane 7a, the side brake or the foot brake need not be placed in the actuated state more than as needed to turn the CRT 7 ON and OFF in order to confirm the information, thus prolonging the life of the CRT 7.

While in the above-described embodiment, an example has been described in which the side brake or the foot brake is placed in the actuated state to display the information on the image plane 7a while the side brake or the foot brake is placed in the non-actuated state to terminate the displaying of the information on the image plane 7a, it is to be noted that the information may be displayed on the image plane 7a merely by the actuated and non-actuated states of the foot brake.

Moreover, an example has been described in which a single timer section 12 is provided but a timer provided interiorly of the MPU 1 may be used together therewith.

According to the above-described invention, the following effects are provided.

As described above, according to the present invention, the information on the basis of the sensed results is displayed on a display section with the form of display differentiated according to the self-supporting sensed state by a self-supporting sensing system on the basis of a gyro, a geomagnetic sensor, a vehicle speed pulse generator and the like at running points, the two-dimensional sensed state by a two-dimension sensing system on the basis of a GPS receiver or the three-dimensional sensed state by a three-dimensional sensing system. With this arrangement, it is possible to precisely inform an user of reliability of display of information on the basis of the sensed results.

As described above, according to the present invention, the display of the information on the image plane is started by placing the foot brake in the actuation state, and the display of the information on the image plane is terminated in a predtermined time after the foot brake has been placed in the non-operable state. With this arrangement, the information can be displayed on the image plane by placing the foot brake in the actuation state, thus improving the operation.

Moreover, even in the case where the foot brake is placed in the actuation state for a short period of time, the information is displayed on the image plane for a predermined period of time after the foot brake has been placed in the non-actuation state. Therefore, the foot brake need not to be placed in the actuation state more than as needed to turn the display section ON and OFF, thus prolonging the life of the display section.

## Claims

1. A navigation apparatus for a vehicle in which a self-supporting sensing system on the basis of a gyro, a geomagnetic sensor, a vehicle speed pulse generator and the like, and a two-dimensional sensing system or a three-dimensional sensing system on the basis of a GPS (Global Positioning System) are suitably switched to effect sensing, and information such as a present position, a running locus and the like on the basis of the sensed results are displayed in a predetermined form of display on a display section, characterized in that said form of display is differentiated in response to the sensed states at the running points whether the sensed states are the self-supporting sensed state on the basis of said self-supporting sensing system, the two-dimensional sensed state on the basis of said two-dimensional sensing system or the three-dimensional sensed state on the basis of said three-dimensional sensing system.

2. A navigation apparatus according to claim 1, wherein when determination is made so that the number of artificial satellites is less than three, the form of display corresponding to the self-supporting sensed state is used to display the present position and the running locus.

3. A navigation apparatus according to claim 1, wherein when determination is made so that the number of artifical satellites is three, the form of display corresponding to the two-dimensional sensed state is used to display the present position and the running locus.

4. A navigation apparatus according to claim 1, wherein when determination is made so that the number of artificial satellites is four or more, the form of display corresponding to the three-dimensional sensed state is used to display the present position and the running locus.

5. A navigation apparatus according to claim 1, wherein the form of display for the present position is differentiated using arrows different in line and size, and the form of display for the running locus is differentiated using different colors.

6. A navigation apparatus for a vehicle comprising a display section for displaying on a display image plane information received from an operating section and information on the basis of the sensed result of a sensing section as well as a map; a foot brake actuation-state detecting section which detects an actuation state of a foot brake to thereby output an actuating output and detects a non-actuation state of the foot brake to thereby output a non-actuation signal; a timer section for counting time; and a control section in which the information is displayed on a display image plane by being supplied with the actuation signal, and when a predetermined time passes on the basis of the output from the timer section after being supplied with the actuation signal, displaying of the information on the image plane is terminated.

7. A navigation apparatus according to claim 6, wherein said navigation apparatus is controlled by a microcomputer composed of MPU, ROM and RAM.

8. A navigation apparatus according to claim 6, wherein said display section comprises a CRT.

9. A navigation apparatus according to claim 6, wherein said timer section is used in combination with a timer provided interiorly of the MPU.

# FIG. 1

MPU 1
ROM 2
RAM 3
GPS RECEIVER 8
GYRO 10
GEOMAGNETIC SENSOR 11

13

OPERATING SECTION 4
VIDEO RAM 5
CRT CONTROLLER 6
CRT 7
CD-ROM 9
VEHICLE SPEED PULSE GENERATOR 12

EP 0 445 719 A2

FIG. 2

START

ST 1
NUMBER OF ARTIFICIAL SATELLITES RECEIVED $\geq 4$

NO

YES

ST 5
DISPLAYED IN THE FORM OF DISPLAY C CORRESPONDING TO THE THREE-DIMENSIONAL SENSING MODE

ST 2
NUMBER OF ARTIFICIAL SATELLITES RECEIVED $= 3$

NO

YES

ST 4
DISPLAYED IN THE FORM OF DISPLAY B CORRESPONDING TO THE TWO-DIMENSIONAL SENSING MODE

ST 3
DISPLAYED IN THE FORM OF DISPLAY A CORRESPONDING TO THE TWO-DIMENSIONAL SENSING MODE

EP 0 445 719 A2

## FIG. 3

21C
21B
21A

## FIG. 4

22B

22A

SELF-SUPPORTING
SENSING SECTION

TWO-DIMENSIONAL
SENSING SECTION

22B

THREE-DIMENSIONAL
SENSING SECTION

22C

22A

22C

SELF-SUPPORTING
SENSING SECTION

THREE-DIMENSIONAL
SENSING SECTION

FIG. 5

# FIG. 6

( START )

ST11

```
INFORMATION OR THE LIKE IS
NOT DISPLAYED ON THE
DISPLAY IMAGE PLANE
```

ST12

IS
THE SIDE
BRAKE IN THE ACTUATED
STATE ?

YES

NO   ST13

IS
THE FOOT
BRAKE IN THE ACTUATED
STATE ?

NO

YES   ST14

```
INFORMATION OR THE LIKE IS
DISPLAYED ON THE DISPLAY
IMAGE PLANE
```

ST15

```
RESET THE TIMER SECTION TO START
```

ST16

IS
THE SIDE
BRAKE IN THE ACTUATED
STATE ?

YES

NO   ST17

IN
THE FOOT
BRAKE IN THE ACTUATED
STATE ?

YES

NO

ST18

HAS
A PREDETERMINED
TIME PASSED
?

NO

YES

FIG. 7a

FIG. 7b

FIG. 8a

FIG. 8b

# FIG. 9

```
                    ( START )
                                        ST1
                        |
        ┌───────────────┐
        |  ┌────────────────────────────────┐
        |  | INFORMATION OR THE LIKE        |
        |  | IS NOT DISPLAYED ON THE        |
        |  | DISPLAY IMAGE PLANE            |
        |  └────────────────────────────────┘
        |           |
        |  ┌────────→|                      ST2
        |  |         ◇
        |  |    IS THE SIDE
        |  NO  BRAKE IN THE ACTUATED
        |  |        STATE?
        |  |         |
        |  └─────────┘
        |           | YES                   ST3
        |  ┌────────────────────────────────┐
        |  | INFORMATION OR THE LIKE        |
        |  | IS DISPLAYED ON THE            |
        |  | DISPLAY IMAGE PLANE            |
        |  └────────────────────────────────┘
        |           |
        |  ┌────────→|                      ST4
        |  |         ◇
        |  |    IS THE SIDE
        |  YES BRAKE IN THE ACTUATED
        |  |        STATE?
        |  └─────────┘
        |           | NO
        └───────────┘
```